(19)

Europäisches
Patentamt
European
Patent Office
Office européen
des brevets

(11) **EP 4 296 288 A1**

(12) **EUROPEAN PATENT APPLICATION**
published in accordance with Art. 153(4) EPC

(43) Date of publication:
**27.12.2023 Bulletin 2023/52**

(21) Application number: **21926799.4**

(22) Date of filing: **21.12.2021**

(51) International Patent Classification (IPC):
*C08F 8/30* (2006.01)      *C08J 3/075* (2006.01)
*C08F 293/00* (2006.01)    *B82Y 30/00* (2011.01)
*H01L 21/027* (2006.01)    *C08J 7/02* (2006.01)
*C08J 7/12* (2006.01)

(52) Cooperative Patent Classification (CPC):
**C08J 3/075; B82Y 30/00; C08F 8/30; C08F 293/00;
C08F 293/005; H01L 21/027;** C08J 2353/00;
C08J 2453/00

(86) International application number:
**PCT/JP2021/047244**

(87) International publication number:
**WO 2022/176376 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.02.2021 JP 2021025680**

(71) Applicant: **Fujikura Ltd.
Tokyo 135-8512 (JP)**

(72) Inventor: **KUNAI, Yuichiro
Tokyo 135-8512 (JP)**

(74) Representative: **Plasseraud IP
66, rue de la Chaussée d'Antin
75440 Paris Cedex 09 (FR)**

(54) **STRUCTURE, PRODUCTION METHOD, AND GEL FOR FORMING FINE STRUCTURE**

(57)    To provide a structure with less distortion, compared to a structure produced by the conventional InpFab process, a structure (10) has a microstructure or a nanostructure and includes multi-block copolymers each including segments a total number of which is not less than 3, and each including at least one first segment (111) and at least one second segment (112) which are each constituted by one or more block polymers and which have hydrophobicity and hydrophilicity, respectively, or have hydrophilicity and hydrophobicity, respectively, the at least one first segment (111) and the at least one second segment (112) being bonded in an alternating manner.

FIG. 1

EP 4 296 288 A1

**Description**

Technical Field

The present invention relates to structures having microstructures or nanostructures, and production methods thereof.

Background Art

The implosion fabrication (hereinafter, referred to as InpFab) process is known as a method of producing a structure having a microstructure, which is a structure having dimensions measured on the scale of micrometers, or a nanostructure, which is a structure having dimensions measured on the scale of nanometers (see Patent Literature 1 and Non-Patent Literature 1).

In the InpFab process, a swollen state hydrogel containing a large quantity of water is exposed to light, so that the hydrogel undergoes patterning, and the hydrogel after patterning is subjected to dehydration to make the hydrogel shrink. When the hydrogel has a shrinkage rate of, for example, 1/10 due to dehydration, shrinkage of the hydrogel after patterning theoretically increases the ten times resolution to that during patterning.

Citation List

[Patent Literature]

[Patent Literature 1]
Specification of US Patent Application Publication No. 2017/0081489

[Non-patent Literature]

[Non-patent Literature 1]
Daniel Oran et. al., Science 362, 1281-1285 (2018) 14 December 2018

Summary of Invention

Technical Problem

Figs. 1A and 1B of Patent Literature 1 depict a polymer matrix of a hydrogel having an ordered network structure. However, the actual structure of the polymer matrix of the hydrogel actually is unordered, as illustrated in (A), (C), and (E) of Fig. 1 of Non-Patent Literature 1. Such an unordered structure occurs because the hydrogel polymer matrix used in Patent Literature 1 and Non-Patent Literature 1 is prepared by the radical polymerization. In general, hydrogels are synthesized by the radical polymerization, which causes the hydrogels to have unordered network structures.

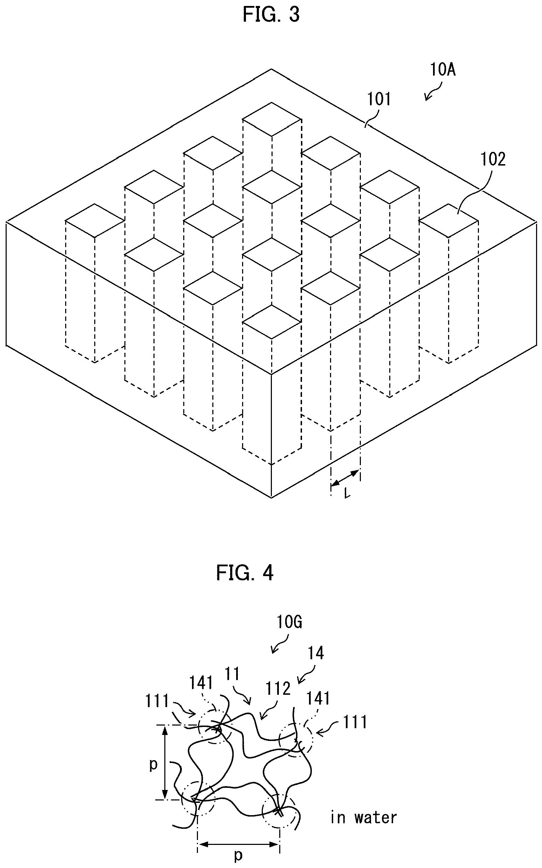

When the hydrogel that has undergone patterning is shrunk by dehydration, distortion occurs in the pattern of the obtained structure because the hydrogel has such an unordered network structure of a polymer matrix (see (A) and (C) of Fig. 4 of the Non-Patent Literature 1). Such distortion increases, as the dimensions of the structure decrease. This is readily understood from the comparison between a structure illustrated in (A) of Fig. 4, which is an example of the microstructure, and a structure illustrated in (C) of Fig. 4, which is an example of the nanostructure.

An aspect of the present invention has been made in view of such a problem, and an object thereof is to provide a structure with lessened distortion, compared to a structure produced by the conventional InpFab process, and a production method thereof.

Solution to Problem

To solve the problem, a structure in accordance with an aspect of the present invention has a microstructure or a nanostructure, and the structure includes multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner.

To solve the problem, a production method in accordance with an aspect of the present invention is a method for producing a structure having a microstructure or a nanostructure, the method including: a first step of dispersing colorants in gelled multi-block copolymers that are gelled by causing a solvent to be contained in multi-block copolymers, the multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner; a second step of performing patterning by exposing, to light, the multi-block copolymers in which the colorants are dispersed; a third step of removing some of the colorants from the multi-block copolymers which have undergone the patterning; and a fourth step of removing the solvent from the multi-block copolymers from which the some of the colorants have been removed, to shrink the multi-block copolymers.

To solve the problem, a fine structure producing gel in accordance with an aspect of the present invention is a fine structure producing gel for producing a structure having a microstructure or a nanostructure, the structure including multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner.

Advantageous Effects of Invention

According to an aspect of the present invention, it is possible to provide a structure with lessened distortion, compared to a structure produced by the conventional InpFab process, and a production method thereof.

Brief Description of Drawings

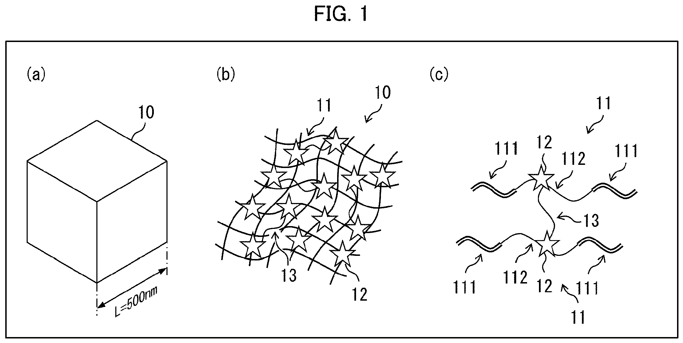

(a) of Fig. 1 is a perspective view of a structure in accordance with a first embodiment of the present invention, (b) of Fig. 1 is a partial enlarged schematic view of the structure illustrated in (a), and (c) of Fig. 1 is a schematic view of two triblock copolymers included in the structure illustrated in (a).

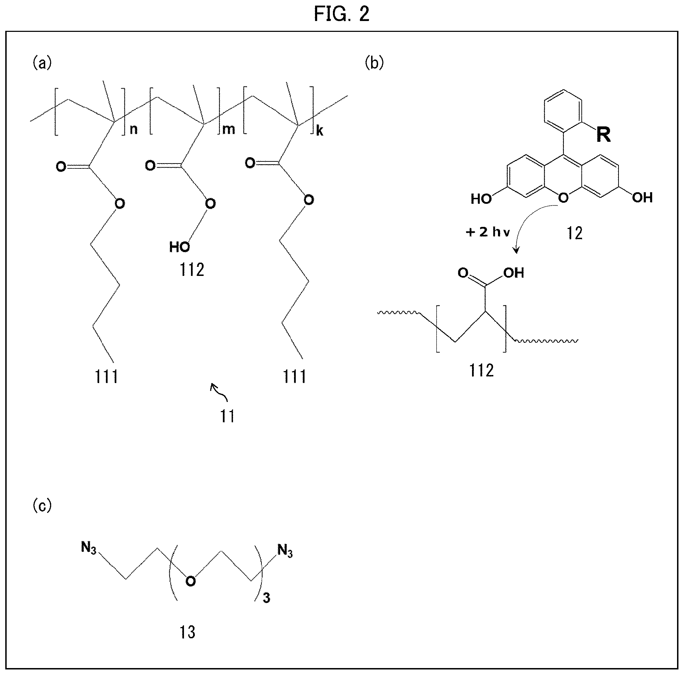

(a) of Fig. 2 is a structural formula of a triblock copolymer illustrated in (b) and (c) of Fig. 1. (b) of Fig. 2 is a structural formula of a colorant illustrated in (b) and (c) of Fig. 1. (c) of Fig. 2 is a structural formula of a crosslinking material illustrated in (b) and (c) of Fig. 1.

Fig. 3 is a perspective view of a modification of the structure illustrated in Fig. 1.

Fig. 4 is a schematic view of a gel in accordance with a second embodiment of the present invention.

Fig. 5 is a flowchart of a production method in accordance with a third embodiment of the present invention.

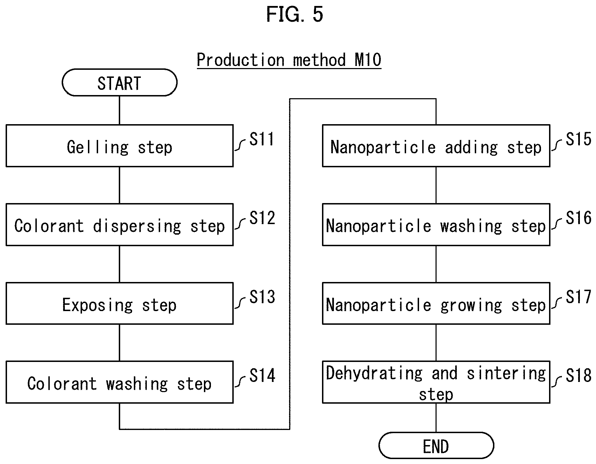

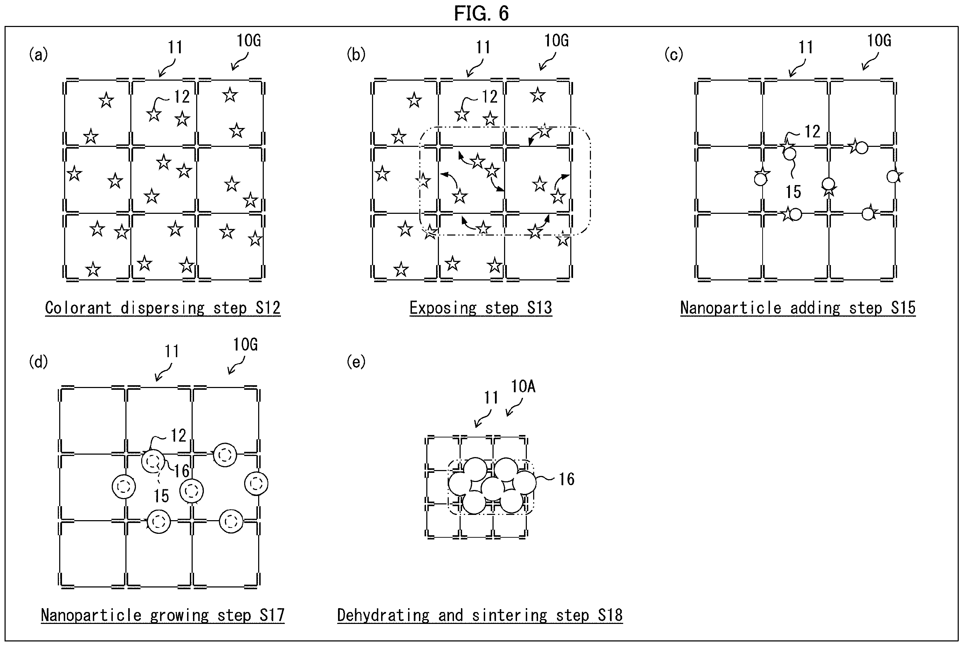

(a) to (e) of Fig. 6 are schematic views of a gel and a structure in steps included in the production method illustrated in Fig. 5.

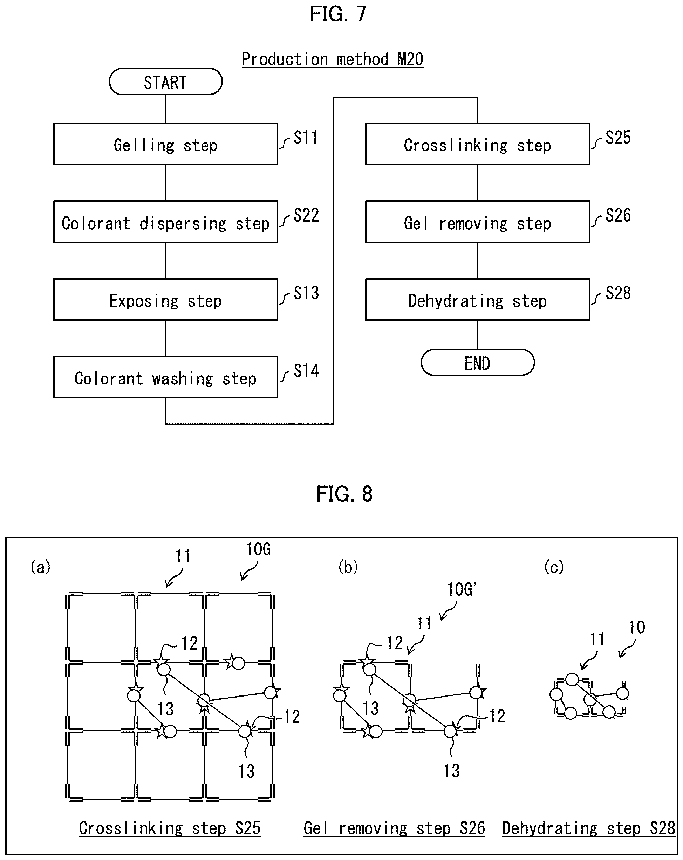

Fig. 7 is a flowchart of a variation of the production method illustrated in Fig. 4.

(a) to (c) of Fig. 8 are schematic views of a gel and a structure in steps included in the production method illustrated in Fig. 7.

Description of Embodiments

[First embodiment]

A structure 10 in accordance with a first embodiment of the present invention will be described with reference to Figs. 1 and 2. (a) of Fig. 1 is a perspective view of the structure 10, (b) of Fig. 1 is a partial enlarged schematic view of the structure 10, and (c) of Fig. 1 is a schematic view of two triblock copolymers 11 included in the structure 10. (a) of Fig. 2 is a structural formula of a specific example of a triblock copolymer 11, (b) of Fig. 2 is a structural formula of a specific example of a colorant 12 included in the structure 10, and (c) of Fig. 2 is a structural formula of a specific example of a crosslinking material 13 included in the structure 10.

<Structure>

According to the first embodiment, the structure 10 has a cubic shape (see (a) of Fig. 1). However, the shape of the structure 10 is not limited thereto. The shape of the structure 10 may be appropriately chosen depending on patterns of exposure performed in an exposing step included in a production method, which will be described later in a third embodiment (see Fig. 4, and (b) of Fig. 5). Further, the structure 10 is not limited to having a three-dimensional structure as illustrated in (a) of Fig. 1, and may have a two-dimensional structure.

According to the first embodiment, a side of the structure 10 has a length L of 500 nm. Thus, the structure 10 has a nanostructure, which is a structure having dimensions measured on the scale of nanometers. However, the structure of the structure 10 is not limited to the nanostructure, and the structure 10 may have a microstructure, which is a structure having dimensions measured on the scale of micrometers. It should be noted that if the existing ImpFab process is used in producing a structure, the shape of the structure is more likely to be distorted due to shrinkage caused by a dehydrating and sintering step, as the dimensions of the structure decreases. Thus, advantageous effects achieved by the structure 10 and production methods M10, M20, which will be described later (see Figs. 4 to 7), become more remarkable as the dimensions of the structure 10 decreases. Specifically, the structure 10 and the production methods 10, 20 may be preferably used in a case in which the minimum width of the pattern is less than 10 pm, and may be more preferably used in a case in which the minimum width of the pattern is less than 1 pm. Herein, the structure having dimensions measured on the scale of nanometers refers to a structure having a minimum width of the pattern of less than 1 pm, and the structure having dimensions measured on the scale of micrometers refers to a structure having a minimum width of the pattern of less than 1 mm.

The structure 10 includes triblock copolymers 11, colorants 12, and crosslinking materials 13 (see (b) of Fig. 1). In (c) of Fig. 1, there are schematically illustrated, in an enlarged manner, two triblock copolymers 11 included in the structure 10.

(Triblock copolymer)

Each triblock copolymer 11, which is an example of a multi-block copolymer, is constituted by two hydrophobic segments 111 and one hydrophilic segment 112 that are bonded in an alternating manner (see (c) of Fig. 1). Each of the segments 111 is an example of a first segment, and the segment 112 is an example of a second segment.

According to the first embodiment, each of the segments 111 and the segment 112 is constituted by a block polymer. The block polymer constituting each of the segments 111 is hydrophobic, and the block polymer constituting the segment 112 is hydrophilic. Examples of the segments 111 and the segment 112 will be described below with reference to (a) of Fig. 2. It should be noted that each of the segments 111 may be constituted by two or more hydrophobic block polymers, and the segment 112 may be constituted by two or more hydrophilic block polymers.

Further, according to the first embodiment, each triblock copolymer 11 includes a segment 111, a segment 112, and another segment 111, and these segments are bonded in this order. In other words, each triblock copolymer 11 is constituted by two segments 111, and one segment 112 that is located between these two segments 111. Thus, the total number of segments in the triblock copolymer 11 is 3. However, the total number of segments are not limited to 3, and any number greater than or equal to 3 may be appropriately chosen as the total number. Thus, the structure 10 may include multi-block copolymers instead of triblock copolymers. It should be noted that the total number of segments is preferably an odd number, and is more preferably 3.

In the production methods M 10, M20, which will be described later, used is a polymer gel (a hydrogel in the production methods M10, M20), which is an intermediate for producing the structure 10 (hereinafter, referred to as "fine structure producing gel"). This polymer gel is obtained by causing a triblock copolymer 11 to swell in a solvent (water in the production methods M10, M20). Since the total number of segments is an odd number, the polarity of a block polymer located at one end of the triblock copolymer 11 is the same as that of another block polymer located at the other end of the triblock copolymer 11. Thus, it is possible to easily cause aggregation of end portions of multiple triblock copolymers 11 in formation of the polymer gel. Further, since the total number of segments is 3, it is possible to prevent aggregation of portions other than end portions of multiple triblock copolymers 11. Thus, it is possible to easily obtain a polymer matrix having even pitches, the polymer matrix constituting the polymer gel.

Herein, the triblock copolymer 11 of the first embodiment is used on the assumption that water, which is a hydrophilic solvent, is used as the solvent in preparing the fine structure producing gel. Thus, as the triblock copolymer 11, employed is a triblock copolymer having opposite ends at each of which the segment 111 is located. When a hydrophobic solvent is used in preparing the fine structure producing gel, a triblock copolymer having opposite ends at each of which the segment 112 is located may be employed as the triblock copolymer 11.

(Colorant and crosslinking material)

As illustrated in (b) and (c) of Fig. 1, a colorant 12 is bonded to a segment 112 of each of at least some of multiple triblock copolymers 11, the segment 112 being located between two segments 111 at the opposite ends. Then, crosslinking materials 13 form crosslinks between colorants 12. Thus, at least some of the triblock copolymers 11 are cross-linked via colorants 12.

In a case in which a triblock copolymer that has opposite ends at each of which a segment 112 is located is employed as the triblock copolymer 11, a colorant 12 may be bonded to a segment 111 located between the two segments 112.

(Specific examples of block polymer, colorant, and crosslinking material)

Examples of block polymers constituting the segment 111, which constitutes the triblock copolymer 11, may include poly(butyl methacrylate) (PBMA), and examples of block polymers constituting the segment 112, which constitutes the triblock copolymer 11, may include poly(methacrylate) (PMMA). According to the specific example illustrated in (a) of Fig. 2, the left segment 111 has a degree of polymerization $n$ of $n=134$, the segment 112 has a degree of polymerization $m$ of $m=273$, and the right segment 111 has a degree of polymerization $k$ of $k=192$.

It should be noted that the block polymer constituting the segment 111 is not limited to PBMA, and the block polymer constituting the segment 112 is not limited to PMMA. As an alternative block polymer for constituting the segment 111, methacrylates and acrylates having alkyl chains, such as poly(hexyl methacrylate) and poly(octyl methacrylate) may be suitably used, but this is not limited thereto, and polymers having a hydrophobic side chain with, for example, an alicyclic functional group or an alkyl fluoride may be suitably used. Examples of an alternative block polymer constituting the segment 112 may include methacrylates and acrylates that have carboxyl groups, such as poly(acrylic acid), but this is not limited thereto, and may be a polymer having a functional group that is capable of reacting with a desired colorant.

The segment 112, which is a segment to which the colorant 12 is bonded, preferably has a molecular weight variance of 3 or less, more preferably has a molecular weight variance of 2 or less, and most preferably has a molecular weight variance of 1.2 or less. Herein, the molecular weight variance is a ratio of number-average molecular weight ($M_n$) in terms of polystyrene to weight-average molecular weight (Mw) in terms of polystyrene ($M_W/M_n$), and is determined by GPC measurement. The smaller the molecular weight variance is, the narrower the range of the chain length distribution of the block polymer is. Thus, it is possible to form a hydrogel having a more uniform network structure. The molecular weight variance of the segment 112 may be appropriately chosen depending on the minimum width of the pattern in the microstructure or nanostructure of the structure 10 to be produced. It is preferable to choose the segment 112 having a lesser molecular weight variance, as the minimum width of the pattern decreases. It should be noted that, similarly to the segment 112, it is preferable that the segment 111 have a smaller molecular weight variance. The segment 111 and the segment 112 can be prepared by controlled polymerization such as living radical polymerization. It is therefore possible to decrease the molecular weight variance.

Further, the ratio of the block component of the segment 112 is preferably within a range of not less than 80% and not more than 100%, and more preferably not less than 90%, when determined by 13C-NMR. The ratio of the block component may be calculated on the basis of sequence information on a triad obtained by 13C-NMR determination. It is herein assumed that the ratio of the block component is defined as follows.

$$\text{(Ratio of block component)} = \text{(fraction including a single type of units)}/\text{(total fraction)} \times 100 \ (\%)$$

In a case in which the block polymer is made of multiple monomers, when these monomers all have a single type of triad component, such fraction can be put in the numerator of the foregoing equation. For example, in a case of a block copolymer including two types of monomers, A and B, fraction "AAA" and fraction "BBB" are put in the numerator, but other fractions that contains multiple types of units, such as "BAB" and "ABA", are not put in the numerator. By choosing a ratio of block component of not less than 80%, it is possible to constitute a gel having a network structure with a well-controlled structure.

Examples of the colorant 12 may include fluorescein, which is a fluorescent colorant, and a derivative of fluorescein in which a carboxyl group of fluorescein is substituted by a substituent R (see (b) of Fig. 2). As the substituent R, a crosslinking material 13, described later, is used. It should be noted that as in a variation of the structure 10, which will be described later, an amino group ($NH_2$), a thiol group (SH), or biotin may be used as the substituent R, when no triblock copolymers 11 are crosslinked to each other.

The crosslinking material 13 is a water base crosslinking material for resins, and examples thereof may include diazides having a water-soluble backbone, such as 1,11-diazido-3,6,9-trioxaundecane (see (c) of Fig. 2). When diazides or the like are used as a crosslinking agent in crosslinking reaction, it is preferable that a substituent to be introduced into the colorant 12 be a functional group having an unsaturated bond, such as a double bond and a triple bond.

<Variation of the structure>

A structure 10A, which is a variation of the structure 10 illustrated in Fig. 1, will be described with reference to Fig. 3. Fig. 3 is a perspective view of the structure 10A.

Like the structure 10, the structure 10A has a nanostructure. Further, like the structure 10, the structure 10A includes triblock copolymers each including two hydrophobic first segments 111 and one hydrophilic second segment 112 that are bonded in an alternating manner, and having a total number of segments of 3.

The triblock copolymers included in the structure 10A differ from the triblock copolymers 11 (see (b) and (c) of Fig. 1) included in the structure 10 in that nanoparticles are bonded to colorants 12 instead of crosslinking materials 13. As for the present variation, the following will describe nanoparticles and a high refractive index part 102. This high refractive index part 102 is a part of triblock copolymers, and is a region in which nanoparticles are bonded to respective colorants 12.

As described above, the structure 10A includes triblock copolymers each including two segments 111 at the opposite ends and one segment 112 located between the two segments 111, in which a colorant 12 and a nanoparticle are bonded in this order to the segment 112.

Nanoparticles are configured so as to have a greater refractive index than that of the polymer matrix that includes segments 111 and segments 112. According to the present variation, nanoparticles made of gold, which is an example of metals, is employed as the nanoparticles. However, a metal of which the nanoparticles are made is not limited to gold, and may be, for example, silver, copper, or platinum. Further, an additional metal may be grown on the surfaces of nanoparticles. Further, the material of which the nanoparticles are made is not limited to a metal, and may be a semiconductor or an insulator, such as a carbon nanotube, a fullerene, titanium oxide, and diamond. Further, these substances are not necessarily used singly, and may be used as a blend or an alloy.

As a result, the refractive index of a region in which each triblock copolymer has a segment 112 to which a colorant 12 and a nanoparticle are bonded, is greater than the refractive index of a region in which each triblock copolymer has a segment 112 to which no colorant 12 and no nanoparticle are bonded. Hereinafter, such a region in which no colorants 12 and no nanoparticles are bonded to segments 112 is referred to as the "low refractive index part 101", and such a region that has a greater refractive index than that of the low refractive index part 101 due to nanoparticles is referred to as the "high refractive index part 102".

According to the present variation, the low refractive index part 101 has a right parallelepiped block-like shape. Regarding dimensions of the low refractive index part 101, each of the opposite bottom walls has four equal sides with a length of 4.5 $\mu$m, and the low refractive index part 101 has a thickness of 1.5 $\mu$m.

According to the present variation, the high refractive index part 102 has a pillar shape. Regarding dimensions of the high refractive index part 102, each of the opposite bottom faces has four equal sides with a length L of 500 nm, and the high refractive index part 102 has a thickness of 1.5 pm. The high refractive index part 102 is formed to penetrate through the low refractive index part 101 from one bottom wall to the opposite bottom wall of the low refractive index part 101. The high refractive index parts 102 configured as have been described are merely an example of the nanostructure. According to the present variation, 16 high refractive index parts 102 are arranged in a matrix pattern inside the low refractive index part 101. In Fig. 3, only one high refractive index part 102, out of the 16 high refractive index parts 102, is denoted by its reference numeral.

It should be noted that the shapes and dimensions of the low refractive index part 101 and the high refractive index parts 102 are not limited to those in the present variation, and they may be appropriately chosen. Each high refractive index part 102 may have an exposed part which is not covered with the low refractive index part 101, as in the present variation, or alternatively, may be embedded in the low refractive index part 101.

[Second embodiment]

A gel 10G in accordance with a second embodiment of the present invention will be described with reference to Fig. 4. Fig. 4 is a schematic view of the gel 10G. For convenience of description, members having functions identical to those described in the first embodiment are given identical referential numerals, and their descriptions are omitted.

The gel 10G is an example of a fine structure producing gel for producing the abovementioned structure 10 or structure 10A. The gel 10G contains water and triblock copolymers each including segments a total number of which is 3, and each including at least one first segment 111 and at least one second segment 112 which are each constituted by one or more block polymers and which have hydrophobicity and hydrophilicity, respectively, or have hydrophilicity and hydrophobicity, respectively, the at least one first segment 111 and the at least one second segment 112 being bonded in an alternating manner. It should be noted that each of the triblock copolymers may be a multi-block copolymer as mentioned above.

The gel 10G is prepared in such a manner that triblock copolymers 11 each including two segments 111 and one segment 112 to which no colorant 12 is bonded are swollen by being dispersed in water, which is an example of hydrophilic solvent.

Each triblock copolymer 11 is configured such that each of the opposite ends thereof is constituted by a hydrophobic segment 111, and the hydrophilic segment 112 is located between the segments 111. By dispersing such triblock copolymers 11 in water, a polymer matrix 14 as illustrated in Fig. 4 is formed. The polymer matrix 14 is constituted by: water, which is a solvent; pseudo-crosslinking points 141 formed by aggregation of segments 111; and segments 112 each located between two crosslinking points 141. To facilitate understanding of the structure of the polymer matrix, Fig. 4 two-dimensionally illustrates the polymer matrix 14; however, the polymer matrix 14 actually has a three-dimensional structure.

The segment 111 and the segment 112 constituting each triblock copolymer 11 can be produced by the controlled polymerization, as described above. Thus, block polymers constituting respective segments 111 and 112 have small molecular weight variances. For example, the block polymers of the segments 111 and 112 preferably have a molecular weight variance of not more than 2, and more preferably not more than 1.2. Since the respective degrees of polymerization of segments 111 and 112 are thus precisely controlled, it is possible to reduce variations in pitch p, which is an interval between adjacent crosslinking points 141 in the polymer matrix 14.

According to the second embodiment, the polymer matrix 14 is formed from triblock copolymers each including a segment 111 located on each of the opposite ends and including a segment 112 located between the segments 111, so that water, which is a hydrophilic solvent, is employed as a solvent. Other examples of a hydrophilic solvent, other than water, may include dimethyl sulfoxide (DMSO) and dimethylformamide (DMF).

Alternatively, in a case where the polymer matrix 14 is formed from triblock copolymers each including a segment 112 located on each of the opposite ends and including a segment 111 located between the segments 112, a hydrophobic solvent may be employed as a solvent. Examples of a hydrophobic solvent may include normal hexane and cyclohexane.

[Third embodiment]

A production method M10 in accordance with a third embodiment of the present invention, which method is suitable for production of the structure 10A illustrated in Fig. 3, will be described with reference to Figs. 5 and 6. Fig. 5 is a flowchart of the production method M10. Fig. 6 is a schematic view illustrating the gel 10G and the structure 10A in steps included in the production method M10. (a) of Fig. 6 is a schematic view of the gel 10G after being subjected to a colorant dispersing step S12, (b) of Fig. 6 is a schematic view of the gel 10G in an exposing step S13, (c) of Fig. 6 is a schematic view of the gel 10G after being subjected to a nanoparticle adding step S15, (d) of Fig. 6 is a schematic view of the gel 10G after being subjected to a nanoparticle growing step S17, and (e) of Fig. 6 is a schematic view of the structure 10A obtained by performing a dehydrating and sintering step S18. For convenience of description, members having functions identical to those described in the first embodiment are given identical referential numerals, and their descriptions are omitted. It should be noted that the production method M10 is based on the InpFab process disclosed in Non-Patent Literature 1, and uses the gel 10G containing the triblock copolymers 11.

As illustrated in Fig. 5, the production method M10 includes a gelling step S11, a colorant dispersing step S12, an exposing step S13, a colorant washing step S14, a nanoparticle adding step S15, a nanoparticle washing step S16, a nanoparticle growing step S17, and a dehydrating and sintering step S18.

The gelling step S11 is a step of obtaining the gel 10G obtained by swelling, in water, the triblock copolymers 11 each including segments a total number of which is 3 and each including two first segments 111 and one second segment 112 bonded in an alternative manner. It should be noted that, although the triblock copolymers 11 are used to prepare the gel 10G in the gelling step S11 in accordance with the third embodiment, a multi-block copolymer having segments a total number of which is not less than 4 may also be used instead of the triblock copolymers 11.

The triblock copolymer 11 including two segments 111 and one segment 112 (see (a) of Fig. 2, for example) may be appropriately chosen from commercially available triblock copolymers and purchased, considering the degrees of polymerization of the segments 111 and the segment 112. Alternatively, segments 111 and 112 each having desired degrees of polymerization may be produced by using the controlled polymerization and then used to produce the triblock copolymer 11.

First, a solution of triblock copolymer 11 in N,N-dimethylformamide (DMF) is prepared. The concentration of the triblock copolymer 11 may be, for example, 20% by weight, but this is not particularly limited thereto. The obtained solution is loaded into a mold (mold) that has a predetermined shape (right parallelepiped shape in the third embodiment). Then, the surface of the solution is exposed to water vapor for several minutes, to obtain a weak gel of the triblock copolymer 11. This weak gel is then soaked in water for three days, to obtain the gel 10G.

Alternatively, in a case where the gel 10G containing desired triblock copolymer 11 is commercially available, the gel 10G may be purchased and the gelling step S11 may be omitted.

The colorant dispersing step S12 is an aspect of a first step, and is a step of dispersing colorant 12 into the gel 10G (see (a) of Fig. 6). Here, in Fig. 6, segments 111 constituting the triblock copolymer 11 are indicated by double lines, and segments 112 are indicated by solid lines. Reference numerals 111 and 112 are not shown in the drawings. It should be noted that the colorant 12 used in the third embodiment is a derivative of fluorescein in which a carboxyl group of fluorescein is substituted by an aminomethyl group, as illustrated in (b) of Fig. 2.

The exposing step S13 is an aspect of a second step, and is a step of performing patterning by exposing, to light, a predetermined area of triblock copolymers 11 constituting the gel 10G in which colorants 12 are dispersed (see (b) of Fig. 6). The exposed area is schematically indicated by a dot-dot-dash line in (b) of Fig. 6. An energy of applied light during the exposure causes colorants 12 to bond to block polymers constituting segments 112 (see (b) of Fig. 2). In a case of the gel 10G having a right parallelepiped shape, an exposure process of two photon absorption may be preferably used to three-dimensionally expose a desired area to light. It should be noted that the foregoing exposing step S13, and the nanoparticle adding step S15, the nanoparticle washing step S16, the nanoparticle growing step S17, and the dehydrating and sintering step S18, which will be described later, are known as the InpFab process. Descriptions of these steps in the third embodiment will therefore be simplified.

The colorant washing step S14 is an aspect of a third step, and is a step of washing the gel 10G that has undergone the patterning, to remove unreacted colorants 12 remaining in the gel 10G. After this step, only colorants 12 bonded to segments 112 within the exposed area remain inside the structure 10. Thus, only colorants 12 present in the area that has been exposed to light by patterning remain.

The nanoparticle adding step S15 is a step of modifying the colorants 12 with respective nanoparticles 15 (made of gold, for example) (see (c) of Fig. 6).

The nanoparticle washing step S16 is a step of washing the gel 10G after the colorants 12 have been modified with the respective nanoparticles 15, to remove nanoparticles not being bonded to any colorants 12 but being present in the gel 10G.

The nanoparticle growing step S17 is a step of further growing the nanoparticles 15 with which the colorants 12 have been modified, to increase the content of the high refractive index material in the gel 10G (see (d) of Fig. 6). In (d) of Fig. 6, the nanoparticles 15 are indicated by broken lines, and the grown particles 16 are indicated by solid lines.

The dehydrating and sintering step S18 is an aspect of a fourth step, and is a step of removing water from triblock copolymers 11 from which colorants 12 have been removed, to shrink the triblock copolymers 11, so as to obtain the structure 10A (see (e) of Fig. 6). This step causes the gel 10G to decrease in dimensions while geometrical similarity to the gel 10G before dehydration is maintained. For convenience of description, a shrinkage rate is determined so that each dimension of the gel 10G is reduced to the half in (e) of Fig. 6. It should be noted that an actual shrinkage rate of the gel 10G due to dehydration is determined depending on the structure of the triblock copolymers 11, and the water content of the gel 10G (in other words, the extent of swelling). For example, according to the third embodiment, when the gel 10G including triblock copolymers 11 (see (a) of Fig. 2) has a water content of about 83%, the shrinkage rate due to dehydration is approximately 1/10.

At this time, because the variation in pitch p between crosslinking points 141 in the polymer matrix 14 constituting the gel 10G as illustrated in Fig. 4 is small, it is possible to reduce distortion that occurs as the gel 10G shrinks. Thus, the area that has undergone patterning in the exposing step S13 (the area indicated by the dot-dot-dash line in (e) of Fig. 6) shrinks as well, maintaining the geometrical similarity to the area that has undergone patterning before dehydration. It is therefore possible to reduce distortion of the structure 10A produced by the production method M10, compared to a structure produced by the conventional InpFab process.

Further, the dehydrating and sintering step S18 includes heating the gel 10G in an oven after the nanoparticle growing step S17. To favorably keep the shape, it is preferable to set the temperature of the dehydration step to be lower than the heat-resistant temperature of the polymer used and the boiling point of the solvent used. For example, in a case of an acrylic acid-based hydrogel containing water, it is preferable to perform drying at a temperature of 60°C to 95°C for about 30 minutes to 120 minutes. Further, it is efficient that vacuum drying is performed after drying and shrinking have progressed to some extent. It is preferable to perform heating for the shortest possible time at a sintering temperature slightly lower than the melting point of the nanoparticles so that only the surfaces of the nanoparticles are melted. Exposing to high heat for a long time may easily cause, for example, damage to the gel and oxidation of metal nanoparticles. To prevent oxidation of metal nanoparticles, it is preferable to perform sintering under an inert atmosphere or in a vacuum. Further, the dehydrating and sintering step may be performed under a combination of multiple heating conditions. For example, in the first half of the dehydrating step, triblock copolymers 11 are heated under the conditions set such that the heating temperature of an oven under an atmospheric pressure is 90°C, and the heating time is one hour, so that the triblock copolymers 11 are roughly dehydrated, and then, the triblock copolymers 11 are dried at the same temperature in a vacuum by a vacuum pump for 30 minutes. In the following sintering step, while a vacuum is maintained, the heating temperature of the oven is changed to 400°C and the heating time is changed to 3 minutes, so that particles 16 included in the triblock copolymers 11 are sintered. This fixes, to each other, the particles 16 included in the triblock copolymers 11, resulting in an increase in strength of the high refractive index parts 102 (see Fig. 3) in the structure 10A. Further, regarding the sintering step, the melting method of nanoparticles is not limited to heating, and an instantaneous sintering method by means of laser, a xenon flash lamp, or the like, may be employed.

<Variation of production method>

A production method M20, which is a variation of the production method M10, will be described with reference to Figs. 7 and 8. Fig. 7 is a flowchart of the production method M20. Fig. 8 is a schematic view of a gel and a structure in steps included in the production method M20. (a) of Fig. 8 is a schematic view of a gel after being subjected to a crosslinking step S25, (b) of Fig. 8 is a schematic view of the gel obtained by performing a gel removing step S26, and (c) of Fig. 8 is a schematic view of the structure 10 obtained by performing a dehydrating step S28.

As illustrated in Fig. 7, the production method M20 includes a gelling step S11, a colorant dispersing step S22, an exposing step S13, a colorant washing step S14, the crosslinking step S25, the gel removing step S26, and the dehydrating step S28. The gelling step S11, the exposing step S13, and the colorant washing step S14 included in the production method M20 are the same as the gelling step S11, the exposing step S13, and the colorant washing step S14 of the production method M10, respectively. Thus, in the present variation, the descriptions of these steps are emitted, and the following will describe the colorant dispersing step S22, the crosslinking step S25, the gel removing step S26, and the dehydrating step S28.

Like the colorant dispersing step S12 included in the production method M10, the colorant dispersing step S22 is a step of dispersing a colorant 12 in the gel 10G; however, the colorant 12 is different from that used in the colorant dispersing step S12. In the present variation, a derivative of fluorescein, illustrated in (b) of Fig. 2, obtained by substituting its carboxyl group by the crosslinking material 13 ((c) of Fig. 2) is employed as the colorant 12.

The crosslinking step S25 is an aspect of a fifth step. The crosslinking step S25 is a step of irradiating, with ultraviolet light, the gel 10G in which the colorant 12 and the crosslinking material 13 are bonded to each of some segments 112 in this order, so that crosslinking materials 13 each bonded to a separate segment 112 are bonded to each other. This step allows triblock copolymers 11 to be cross-linked via colorants 12 and crosslinking materials 13 (see (a) of Fig. 8).

The gel removing step S26 is a step in which the gel 10G is soaked with a hydrophobic solvent, or alternatively, the gel 10G is exposed to vapor of a hydrophobic solvent, to degrade gel 10G in an area in which no crosslinks are formed via colorants 12 and crosslinking materials 13. In this step, obtained is a gel 10G' cross-linked via colorants 12 and crosslinking materials 13 (see (b) of Fig. 8).

Like the dehydrating and sintering step S18 of the production method M 10, the dehydrating step S28 is an aspect of the fourth step, and is a step of removing water from triblock copolymers 11 from which colorants 12 have been removed, to shrink the triblock copolymers 11, so that the structure 10 is obtained (see (e) of Fig. 6).

Like the production method M10, the production method M20 uses the gel 10G containing the triblock copolymers 11. It is therefore possible to reduce distortion of the structure 10 produced by the production method M20, compared to a structure produced by the conventional InpFab process.

Further, according to the production method M20, the gel removing step S26 is performed. This makes it possible to degrade a part of the gel 10G which is in an area in which no crosslinks are formed via colorants 12 and crosslinking materials 13. Thus, it is possible to obtain, as the structure 10, only a part of the gel 10G which is in an area having undergone patterning in the exposing step S13. Therefore, according to the production method M20, it is possible to produce the structure 10 that cannot be produced by the conventional InpFab process.

A structure in accordance with a first aspect of the present invention has a microstructure or a nanostructure, and the structure includes multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner.

The structure in accordance with the first aspect can be produced by adopting the InpFab process disclosed in Non-Patent Literature 1. Although the block polymers have linear forms, the hydrophobic segment(s) and the hydrophilic segment(s) are bonded to each other in an alternating manner, and a total number of the segments is not less than 3. Thus, when the block polymers are dispersed in a hydrophilic or hydrophobic solvent, segments having a polarity opposite to that of the solvent aggregate in the solvent, and form physical crosslinking points, to form a swollen gel form. For example, in a case in which a block polymer including three segments, that is, a hydrophobic segment, a hydrophilic segment, and a hydrophobic segment, is dispersed in water, the hydrophobic segments located at opposite ends of the respective block polymers aggregate and form physical crosslinking points, to form a gel form. A block polymer constituting a first segment and a block polymer constituting a second segment can be produced by using controlled polymerization, and thus, the degree of polymerization of each block polymer can be precisely controlled. Thus, it is possible to reduce variation in pitch between crosslinking points of the polymer matrix in a gel obtained by swelling multi-block copolymers with use of a solvent. Thus, it is possible to lessen distortion of the structure 10, compared to a structure produced by the conventional InpFab process.

Further, a structure in accordance with a second aspect of the present invention employs, in addition to the abovementioned configuration of the structure in accordance with the first aspect, a configuration in which each of the multi-block copolymers is a triblock copolymer including segments a total number of which is 3, wherein the at least one first segment includes two first segments, and the at least one second segment includes one second segment, the one second segment being located between the two first segments.

According to the foregoing configuration, a hydrophilic solvent (e.g., water) may be used as a solvent for swelling the multi-block copolymers.

Further, a structure in accordance with a third aspect of the present invention employs, in addition to the abovementioned configuration of the structure in accordance with a first or second aspect, a configuration in which in each of the multi-block copolymers, a colorant and a nanoparticle are bonded in this order to the at least one first segment or the at least one second segment, wherein a refractive index of the nanoparticle is greater than that of a polymer matrix including the at least one first segment and the at least one second segment.

According to the foregoing configuration, it is possible to separately form as intended, inside the structure, a region in which the refractive index is low because no nanoparticles are contained, and a region in which the refractive index is high because nanoparticles are contained.

Further, a structure in accordance with a fourth aspect of the present invention employs, in addition to the abovementioned configuration of the structure in accordance with any one of the first to third aspects, a configuration in which, in each of the multi-block copolymers, a colorant is bonded to the at least one first segment or the at least one second segment, wherein at least some of the multi-block copolymers are cross-linked via the colorant.

According to the foregoing configuration, during the course of producing the present structure, it is possible to degrade, of a gel obtained by swelling the multi-block copolymers, a part of the gel which is in an area in which no crosslinks are formed via colorants. Thus, it is possible to obtain, as the structure, only a part of the gel which is in an area where crosslinks are formed via the colorants (i.e., an area having undergone patterning).

Further, a structure in accordance with a fifth aspect of the present invention employs, in addition to the abovementioned configuration of the structure in accordance with any one of the first to fourth aspects, a configuration in which, in each of the multi-block copolymers, a colorant is bonded to the at least one first segment or the at least one second segment, wherein the at least one first segment or the at least one second segment to which the colorant is bonded has a molecular weight variance of not more than 2.

According to the foregoing configuration, it is possible to further reduce variation in pitch between crosslinking points of the polymer matrix in a gel obtained by swelling multi-block copolymers with use of a solvent. Thus, it is possible to further lessen distortion of the structure, compared to a structure produced by the conventional InpFab process.

Further, a structure in accordance with a sixth aspect of the present invention employs, in addition to the abovementioned configuration of the structure in accordance with any one of the first to fifth aspects, a configuration in which, in each of the multi-block copolymers, a colorant is bonded to the at least one first segment or the at least one second segment, wherein a ratio of a block component constituting the at least one first segment or the at least one second segment to which the colorant is bonded, ranges from not less than 80% and not more than 100%, when being determined by 13C-NMR.

According to the foregoing configuration, since the ratio of a block component is not less than 80%, it is possible to form a gel having a network structure with a well-controlled structure.

A production method in accordance with a seventh aspect of the present invention is a method for producing a structure having a microstructure or a nanostructure, the method including: a first step of dispersing colorants in gelled multi-block copolymers that are gelled by causing a solvent to be contained in multi-block copolymers, the multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner; a second step of performing patterning by exposing, to light, the multi-block copolymers in which the colorants are dispersed; a third step of removing some of the colorants from the multi-block copolymers which have undergone the patterning; and a fourth step of removing the solvent from the multi-block copolymers from which the some of the colorants have been removed, to shrink the multi-block copolymers.

Since the one or more block polymers constituting the first segment and the one or more block polymers constituting the second segment are produced by using the controlled polymerization, it is possible to precisely control the degree of polymerization of each block polymer. Thus, it is possible to reduce variation in pitch between crosslinking points of the polymer matrix in a gel obtained by swelling multi-block copolymers with use of a solvent. Thus, use of the present production method lessens distortion of the structure, compared to a structure produced by the conventional InpFab process.

Further, a production method in accordance with a eighth aspect of the present invention employs, in addition to the abovementioned configuration of the method in accordance with the seventh aspect, a configuration in which crosslinking agents are bonded to the colorants, the method further including a sixth step of cross-linking at least some of the multi-block copolymers to each other with use of the crosslinking agents, the fifth step being carried out after the third step.

The foregoing configuration achieves the advantageous effects similar to those achieved by the structure in accordance with the fourth aspect of the present invention.

A fine structure producing gel in accordance with a ninth aspect of the present invention is a fine structure producing gel for producing a structure having a microstructure or a nanostructure, the structure including multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner.

This fine structure producing gel can be suitably used to produce a structure having a microstructure or a nanostructure by adopting the InpFab process.

[Supplementary notes]

The present invention is not limited to the embodiments, but can be altered by a skilled person in the art within the scope of the claims. The present invention also encompasses, in its technical scope, any embodiment derived by combining technical means disclosed in differing embodiments.

Reference Signs List

| 10, 10A | Structures |
| 10G | Gel (an example of fine structure producing gels) |
| 101, 102 | Low refractive index part, high refractive index part |
| 11 | Triblock copolymer (an example of multi-block copolymers) |
| 111, | 112 Segments (examples of first and second segments) |
| 12 | Colorant |
| 13 | Crosslinking material |
| 14 | Polymer matrix |
| 141 | Crosslinking point |

**Claims**

1. A structure having a microstructure or a nanostructure, the structure comprising
   multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner.

2. The structure according to claim 1, wherein each of the multi-block copolymers is a triblock copolymer including segments a total number of which is 3, wherein the at least one first segment comprises two first segments, and the at least one second segment comprises one second segment, the one second segment being located between the two first segments.

3. The structure according to claim 1 or 2,

   wherein, in each of the multi-block copolymers, a colorant and a nanoparticle are bonded in this order to the at least one first segment or the at least one second segment,
   wherein a refractive index of the nanoparticle is greater than that of a polymer matrix including the at least one first segment and the at least one second segment.

4. The structure according to any one of claims 1 to 3, wherein, in each of the multi-block copolymers, a colorant is bonded to the at least one first segment or the at least one second segment,
   wherein at least some of the multi-block copolymers are cross-linked via the colorant.

5. The structure according to any one of claims 1 to 4, wherein, in each of the multi-block copolymers, a colorant is bonded to the at least one first segment or the at least one second segment,
   wherein the at least one first segment or the at least one second segment to which the colorant is bonded has a molecular weight variance of not more than 2.

6. The structure according to any one of claims 1 to 5, wherein, in each of the multi-block copolymers, a colorant is bonded to the at least one first segment or the at least one second segment,
wherein a ratio of a block component constituting the at least one first segment or the at least one second segment to which the colorant is bonded, ranges from not less than 80% and not more than 100%, when being determined by 13C-NMR.

7. A method for producing a structure having a microstructure or a nanostructure, the method comprising:

a first step of dispersing colorants in gelled multi-block copolymers that are gelled by causing a solvent to be contained in multi-block copolymers, the multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner;
a second step of performing patterning by exposing, to light, the multi-block copolymers in which the colorants are dispersed;
a third step of removing some of the colorants from the multi-block copolymers which have undergone the patterning; and
a fourth step of removing the solvent from the multi-block copolymers from which the some of the colorants have been removed, to shrink the multi-block copolymers.

8. The method according to claim 7, wherein crosslinking agents are bonded to the colorants,
the method further comprising a sixth step of cross-linking at least some of the multi-block copolymers to each other with use of the crosslinking agents, the fifth step being carried out after the third step.

9. A fine structure producing gel for producing a structure having a microstructure or a nanostructure,
the structure comprising multi-block copolymers each including segments a total number of which is not less than 3, and each including at least one first segment and at least one second segment which are each constituted by one or more block polymers and which have hydrophobicity and hydrophilicity, respectively, or have hydrophilicity and hydrophobicity, respectively, the at least one first segment and the at least one second segment being bonded in an alternating manner.

FIG. 1

(a)

10

L=500nm

(b)

11

10

13

12

(c)

11

111  12  112  111

13

111  112  12  111

11

## FIG. 2

(a)

112

111    111

11

(b)

+ 2 h v    12

112

(c)

13

FIG. 3

10A

101

102

L

FIG. 4

10G

14

141

11

112

141

111

111

p

p

in water

FIG. 5

Production method M10

START

Gelling step — S11

Colorant dispersing step — S12

Exposing step — S13

Colorant washing step — S14

Nanoparticle adding step — S15

Nanoparticle washing step — S16

Nanoparticle growing step — S17

Dehydrating and sintering step — S18

END

FIG. 6

(a)

11 12 10G

Colorant dispersing step S12

(b)

11 12 10G

Exposing step S13

(c)

11 12 15 10G

Nanoparticle adding step S15

(d)

11 12 16 15 10G

Nanoparticle growing step S17

(e)

11 10A 16

Dehydrating and sintering step S18

## FIG. 7

Production method M20

```
        ┌─────────────┐
        │    START    │
        └─────────────┘
               │
  ┌─────────────────────────┐
  │      Gelling step       │ ─ S11
  └─────────────────────────┘
               │
  ┌─────────────────────────┐
  │ Colorant dispersing step│ ─ S22
  └─────────────────────────┘
               │
  ┌─────────────────────────┐
  │      Exposing step      │ ─ S13
  └─────────────────────────┘
               │
  ┌─────────────────────────┐
  │  Colorant washing step  │ ─ S14
  └─────────────────────────┘

  ┌─────────────────────────┐
  │    Crosslinking step    │ ─ S25
  └─────────────────────────┘
               │
  ┌─────────────────────────┐
  │    Gel removing step    │ ─ S26
  └─────────────────────────┘
               │
  ┌─────────────────────────┐
  │    Dehydrating step     │ ─ S28
  └─────────────────────────┘
               │
        ┌─────────────┐
        │     END     │
        └─────────────┘
```

## FIG. 8

(a) Crosslinking step S25    (b) Gel removing step S26    (c) Dehydrating step S28

<div align="center">

**INTERNATIONAL SEARCH REPORT**

</div>

| International application No. |
| --- |
| **PCT/JP2021/047244** |

**A.    CLASSIFICATION OF SUBJECT MATTER**

*C08F 8/30*(2006.01)i; *C08J 3/075*(2006.01)i; *C08F 293/00*(2006.01)i; *B82Y 30/00*(2011.01)i; *H01L 21/027*(2006.01)i; *C08J 7/02*(2006.01)i; *C08J 7/12*(2006.01)i

FI:    C08F293/00; B82Y30/00; H01L21/30 502D; C08F8/30; C08J7/02 Z CEY; C08J7/12 Z; C08J3/075

According to International Patent Classification (IPC) or to both national classification and IPC

**B.    FIELDS SEARCHED**

Minimum documentation searched (classification system followed by classification symbols)

C08F8/30; C08J3/075; C08F293/00-297/08; B82Y30/00; H01L21/027; C08J7/02; C08J7/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JST7580 (JDreamIII)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2003-531083 A (THE REG. OF THE UNIVERSITY OF CALIFORNIA) 21 October 2003 (2003-10-21) | 1-2, 9 |
|   | claims, paragraphs [0028]-[0030], [0049], [0052], [0083], [0140] | |
| A | | 3-8 |
| X | US 2016/0332869 A1 (WASHINGTON STATE UNIVERSITY) 17 November 2016 (2016-11-17) | 1-2, 9 |
|   | claims, paragraphs [0002], [0010]-[0013], [0035], [0046], [0049] | |
| A | | 3-8 |
| X | US 2020/0131383 A1 (TRUSTEES OF DARTMOUTH COLLEGE) 30 April 2020 (2020-04-30) | 1-2 |
|   | claims, paragraphs [0008]-[0009], [0016], [0106]-[0109], [0259]-[0260], fig. 2A | |
| A | | 3-9 |

☑ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 March 2022** | **22 March 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 296 288 A1**

### INTERNATIONAL SEARCH REPORT

| International application No. |
| --- |
| **PCT/JP2021/047244** |

**C.    DOCUMENTS CONSIDERED TO BE RELEVANT**

| Category* | Citation of document, with indication, where appropriate, of the relevant passages | Relevant to claim No. |
| --- | --- | --- |
| X | US 6592991 B1 (MAX-PLANCK-GESELLSCHAFT ZUR FOERDERUNG DER WISSENSCHAFTEN E.V.) 15 July 2003 (2003-07-15) claims, column 2, line 66 to column 4, line 39, column 7, line 67 to column 8, line 24 | 1-2 |
| A | | 3-9 |
| P, X | US 2021/0171668 A1 (TRUSTEES OF DARTMOUTH COLLEGE) 10 June 2021 (2021-06-10) claims, paragraphs [0050]-[0051], [0064] | 1-2, 9 |
| P, A | | 3-8 |
| A | YIFEI, Jin et al. Nanoclay-Based Self-Supporting Responsive Nanocomposite Hydrogels for Printing Applications. ACS Appl. Mater. Interfaces. 2018, vol. 10, pages 10461-10470 pages 10461-10470 | 1-9 |

Form PCT/ISA/210 (second sheet) (January 2015)

**INTERNATIONAL SEARCH REPORT**
Information on patent family members

International application No.

**PCT/JP2021/047244**

| Patent document cited in search report | | | Publication date (day/month/year) | Patent family member(s) | | | Publication date (day/month/year) |
|---|---|---|---|---|---|---|---|
| JP | 2003-531083 | A | 21 October 2003 | WO | 1999/037705 | A1 | |
| | | | | claims, page 18, line 19 to page 19, line 22, page 24, lines 19-27, page 25, lines 20-29, page 34, line 12 to page 35, line 9, page 60, lines 1-17 | | | |
| | | | | US | 6592764 | B1 | |
| | | | | US | 2003/0205528 | A1 | |
| | | | | US | 2007/0256978 | A1 | |
| | | | | US | 2004/0144726 | A1 | |
| | | | | AU | 3739799 | A | |
| | | | | KR | 10-0624648 | B1 | |
| | | | | IL | 136479 | A | |
| US | 2016/0332869 | A1 | 17 November 2016 | WO | 2015/100126 | A2 | |
| US | 2020/0131383 | A1 | 30 April 2020 | WO | 2018/200944 | A1 | |
| US | 6592991 | B1 | 15 July 2003 | WO | 1999/012994 | A1 | |
| | | | | DE | 19738913 | A1 | |
| US | 2021/0171668 | A1 | 10 June 2021 | US | 2019/0144569 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170081489

**Non-patent literature cited in the description**

- **DANIEL ORAN.** *Science,* 14 December 2018, vol. 362, 1281-1285